# EUROPÄISCHE PATENTANMELDUNG

(11) **EP 1 027 982 A2**
(43) Veröffentlichungstag der Anmeldung: **16.08.2000**
(21) Anmeldenummer: 00102614.5
(22) Anmeldetag: 08.02.2000
(51) Int. Cl.: B29D 30/06, B29C 35/02

(54) **Verfahren zur Herstellung eines Luftreifens**

(30) Priorität: 11.02.1999 DE 19905643
(71) Anmelder: Continental Aktiengesellschaft, 30165 Hannover (DE)
(72) Erfinder: Baumgarten, Reiner, 29649 Wietzendorf (DE); Campsheide, Olaf, 31582 Nienburg (DE); Fries, Volkmar, Dr., 30827 Garbsen (DE); Jenke, Roland, 29693 Hadernstorf (DE)

(57) **Zusammenfassung**

Verfahren zur Herstellung eines Luftreifens, insbesondere zur Herstellung eines Luftreifens für Kraftfahrzeuge, wobei das Verfahren einen schrittweisen Aufbau des Reifens in zwei voneinander getrennten Verfahrensteilen A und B umfaßt, wobei im Verfahrensteil A ein Teilreifen aufgebaut wird und im Verfahrensteil B der Teilreifen durch Hinzufügen der restlichen Reifenbauteile zu einem Komplettreifen aufgebaut und einem zweiten Vulkanisationsvorgang unterzogen wird, wobei die im Verfahrensteil B während des zweiten Vulkanisationsvorganges in einer Vulkanisationsform durch Innendruck aufgebrachte Resterhebung der Schulterbereiche des komplettierten Reifens größer als die oder gleich der Resterhebung im Zenitbereich ist.

## Beschreibung

Die Erfindung betrifft ein Verfahren zur Herstellung eines Luftreifens, insbesondere zur Herstellung eines Luftreifens für Kraftfahrzeuge, wobei das Verfahren einen schrittweisen Aufbau des Reifens mit einer Innenseele aus einer möglichst weitgehend luftundurchlässigen Schicht, zumindest einer mit Festigkeitsträgern versehenen Karkassenlage, Hornprofilen, Wulstkernen, Seitenwänden sowie einem Gürtelverband, ggf. einer ein- oder mehrteiligen Gürtelbandage und einem Laufstreifen umfaßt, und das Herstellverfahren in zwei voneinander getrennte Verfahrensteile A und B geteilt ist, und wobei im Verfahrensteil A ein Teilreifen aufgebaut wird, der zumindest den mit Verstärkungslagen versehenen Karkasskörper mit Wulstverstärkungen und -kernen, Kernreitern und die Hornprofilen, sowie gegebenenfalls bereits Teile der Gürtellagen und / oder der Gürtelbandage und des Laufstreifenunterbaus beinhaltet, und der bombiert und anschließend in einem ersten Vulkanisationsvorgang unter Innendruck in einer Vulkanisationsform mindestens teilweise vulkanisiert wird, wobei sowohl der Oberfläche als auch dem bzw. den Festigkeitsträger(n) eine vorbestimmte Querschnittskontur vermittelt wird, wobei im Verfahrensteil B der Teilreifen durch Hinzufügen der restlichen Reifenbauteile, im wesentlichen durch Hinzufügen des Gürtelverbandes, gegebenenfalls der zumindest einlagigen ein- oder mehrteiligen Gürtelbandage, des Laufstreifens und der restlichen Seitenwandteile zu einem Komplettreifen aufgebaut werden, welcher ebenfalls zur Verbindung mit den restlichen Reifenbauteilen unter Aufbringen einer durch Innendruck erzeugten Resterhebung in einer Vulkanisationsform einem zweiten Vulkanisationsvorgang unterzogen wird, in welchem der Komplettreifen zur Endkontur geformt wird.

Bei einem im Gegesatz hierzu klassischen Herstellungsverfahren von Neureifen erfolgt der bekannte Aufbau der Reifenkarkasse auf einer ersten Aufbautrommel und der weitere Aufbau zum fertigen Rohreifen auf einer zweiten Aufbautrommel, die einen Bombierteil umfaßt und auf der die Karkasse mit dem Gürtellaufflächenpaket zusammengefügt wird.

Ebenfall ist es üblich, ein Einstufenverfahren einzusetzen, bei dem die Karkassenherstellung und die Fertigstellung des Rohreifens auf einer einzigen Aufbaumaschine mit mehreren Aufbautrommeln erfolgt.

Der fertiggestellte Rohreifen wird in einer entsprechenden Vulkanisationsform ausvulkanisert und erhält somit seine endgültige Gestalt mit eingeformtem Laufstreifenprofil.

Hierbei ergibt sich immer das Problem, daß bereits bei der Bombierung des zylinderförmigen Rohlings zum torusförmigen Reifenkörper und auch während der Vulkanisation, bei der der Rohling über einen Balg mit Innendruck beaufschlagt und unter erhöhte Temperatur gesetzt wird und dann seine sogenannte 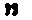 Resterhebung" erhält, berücksichtigt werden muß, daß sich durch jeden Expansionsvorgang die Geometrie der Karkasse verändern und auch die Volumina der Gummiauflagen, d. h. also z. B. auch die der Laufstreifen oder der Seitenwandgummiteile verlagern können, so daß bereits im Vorfeld eine diesbezügliche und empirisch zu ermittelnde Einstellung zur Kompensation vorgenommen werden muß. Eine solche Kompensation birgt damit in sich die Nachteile, daß etwa in den besonders der Ausdehnung unterworfenen Bereichen eine genaue Dosierung der Gummivolumina und eine exakte Formgebung schwierig sind.

Dementsprechend sind immer wieder gattungsgemäße Verfahren und auch Vorrichtungen vorgeschlagen worden, bei denen zunächst eine mindestens teilweise vulkanisierte Rohkarkasse hergestellt wird und die äußeren Lagen des Reifens nachträglich auf die in ihrer Kontur bereits im wesentlichen dem fertigen Reifen entsprechenden Rohkarkkasse bzw. den Karkasskörper aufgebracht werden.

So zeigt die DE-PS 14 80 936 einen Reifen, bei dem ein vulkanisierter Laufring mit gürtelartiger Verstärkung mit einem unvulkanisierten bzw. lediglich vorvulkanisierten Reifenkörper bzw. einer Reifenkarkasse vereinigt wird, worauf danach der Gesamtreifen ausvulkanisiert wird. Nachteilig bei diesem Verfahren ist es jedoch, daß zur Verbindung der Karkasse und des Laufstreifens in aller Regel eine weitere Schicht eingelegt werden muß, die die Haftung der einzelnen Teile untereinander sichert.

Wie bei allen bisherigen Verfahren, die eine separate Herstellung und Vulkanisation eines Karkasskörpers und dessen nachträgliche und in einem weiteren separaten Fertigungsschritt erfolgende Verbindung mit den restlichen Reifenbauteilen vorschlagen, ergibt sich auch hier das Problem, daß durch das zur Verbindung mit den restlichen Reifenbauteilen erforderliche nochmalige Bombieren, d.h. durch die Resterhebung der bereits vulkanisierten und formfesten Karkasse in den Karkassbauteilen, also in den Verstärkungslagen und insbesondere auch in bereits vorhandenen Gürtellagen, erhöhte Spannungen und Stauchungen eingebracht werden, die die Reifenhalbarkeit stark beeinflussen können. Eine zur Reduzierung der nochmalige Bombierung der bereits vulkanisierten und formfesten Karkasse eingelegte Kleb- oder Verbindungschicht löst dieses Problem nicht grundlegend, da hiedurch wieder das Vulkanisationsverfahren nachteilig beeinflußt wird.

Zudem entsteht bei einem solchen zweigeteilten Herstellungsprozeß ein Zielkonflikt in der Art, daß einerseits die einzelnen radial zustellbaren Umfangssegmente einer üblicherweise als Segmentform ausgebildeten Vulkanisierform zum Schließen der Form möglichst nur einen geringen Verfahr- oder Zustellweg in radialer Richtung aufweisen sollen, da andernfalls an den schließenden Segmentgrenzen starke Quetschungen des Gummimateriales mit einer in die Schließspalte und radial auswärts gerichteten Fließkomponente auftreten, die die Reifengleichförmigkeit (Uniformity) stark beeinflußen und eine Nacharbeit erfordern. Ein solcher geringer Verfahr- oder Zustellweg in radialer Richtung erfordert aber, u.a.zum Aufbringen des nötigen Vulkanisationsdruckes, eine große Resterhebung, die wiederum, wie bereits dargestellt, in den Karkassbauteilen, also in den Verstärkungslagen und insbesondere auch in bereits vorhandenen Gürtellagen, die ungewünschten erhöhten Spannungen und Stauchungen erzeugt.

Die Folgen mangelnder Reifengleichförmigkeit zeigen sich in einem nicht zufriedenstellenden Laufverhalten, in erhöhter Geräuschentwicklung, und in starker Belastung der Verbindungsbereiche im Betrieb.

Ebendiese Nachteile zeigt auch das in der DE-OS 20 32 636 offenbarte Verfahren, bei dem eine laufflächenfreie Reifendecke, d.h. ein Karkasskörper zunächst als Teilreifen hergestellt, danach mit einem Schutzüberzug versehen und anschließend einer Teilvulkanisation zugeführt wird. Bei dieser Teilvulkanisation wird die Innenseite der Reifendecke vollständig ausvulkanisiert, während die radial äußere Oberfläche der laufflächenfreien Reifendecke nicht vulkanisiert wird. Es steht so ein über seinen Querschnitt halb ausvulkanisierter laufflächenfreier Reifenkörper mit einem Schutzüberzug der weiteren Fertigung zur Verfügung.

Der Schutzüberzug soll hierbei im wesentlichen den Teilreifen, d. h. den nicht vollkommen vulkanisierten Teil der Reifendecke während einer Zwischenlagerzeit vor schädlichen Einflüssen schützen. Zu einem späteren Fertigungszeitpunkt wird der Schutzüberzug entfernt und eine Lauffläche auf den laufflächenfreien Reifen aufgebracht, wobei der fertige Reifen dann unter Druck und Hitze vollständig ausvulkanisiert wird.

Die DE-PS 17 29 633 beschreibt ein Verfahren zur Herstellung eines Luftreifens, bei dem eine Karkasse lediglich so vorvulkanisiert wird, daß die bereits vorhandenen Verstärkungs- oder Gewebelagen soweit fixiert sind, daß eine gravierende Verschiebung derselben während der nachfolgenden Profilausformung nicht mehr zu befürchten ist. Hierdurch wird zwar das oft beschriebene Problem gelöst, daß beim Einpressen des Laufflächenprofils durch die dann entstehenden Verschiebungen der Volumina im noch nicht vulkanisierten Gummi auch eine Verschiebung der Verstärkungslagen stattfinden kann, welche nachteiligen Einfluß auf die spätere Reifenfestigkeit hat, jedoch wird das Einbringen von Spannungen und Stauchungen in die Karkassbauteile auch hier nicht verhindert und auch der oben beschriebene Zielkonflikt nicht gelöst.

Aufgabe der Erfindung war es also, ein Verfahren zur Herstellung eines Luftreifens vorzuschlagen, bei dem zunächst eine mindestens teilweise vulkanisierte Karkasse als Teilreifen hergestellt wird und der Teilreifen in einem separaten Fertigstellungsprozeß durch Hinzufügen der restlichen Reifenbauteile zu einem Komplettreifen aufgebaut wird, bei dem eine sichere Verbindung zwischen Karkasse und restlichen Reifenbauteilen aufgebaut wird, bei dem die Resterhebung der bereits vulkanisierten und formfesten Karkasse im wesentlichen ohne Einbringen von Spannungen oder Stauchungen in die Karkassbauteile erfolgt, bei dem Reifenungleichförmigkeiten durch zufahrende Formsegmente minimiert werden, und welches ohne größeren Aufwand in wirtschaftlicher Weise in bestehende gattungsgemäße Fertigungsverfahren einzugliedern ist.

Gelöst wird die Aufgabe durch die Merkmale des Hauptanspruchs. Weitere vorteilhafte Ausgestaltungen und Verfahrensvarianten sind in den übrigen Ansprüchen enthalten.

Hierbei ist gemäß Hauptanspruch das Verfahren so ausgebildet, daß die im Verfahrensteil B während des zweiten Vulkanisationsvorganges in einer Vulkanisationsform durch Innendruck aufgebrachte Resterhebung der Schulterbereiche des komplettierten Reifens größer als die oder gleich der Resterhebung im Zenitbereich ist.

Die erfindungsgemäße Verfahrensweise einer gezielt verteilten und in Bezug auf Schulter- und Zenitbereich relativierten Resterhebung wirkt sich insbesondere im Hinblick auf die durch die Resterhebung aufgebrachten Cordkräfte im Gürtel günstig im Sinne einer Reduzierung aus. Dies gilt ebenfalls für die Zug- oder Druckbelastung an der Gürtelkante, trotz des hier größeren Einflusses der Erhebung im Bereich der Reifenschulter.

Eine Reduzierung der eingebrachten Spannungen und Stauchungen führt dann zu einer für das gattungsgemäße Reifenherstellungsverfahren ausgezeichneten Reifenhaltbarkeit. Ebenfalls läßt sich durch eine solche Verfahrensweise der Zustellweg bzw. die Eindringtiefe der Formsegmente reduzieren, insbesondere an den kritischen Stellen im Schulterbereich, was zu positiven Effekten führt im Hinblick auf Laufverhalten, Geräuschentwicklung und Belastung der Verbindungsbereiche im Betrieb.

Eine alternative oder auch zusätzlich vorteilhafte Ausbildung des Verfahrens besteht darin, daß eine solche Vorbestimmung der Querschnittskontur des im Verfahrensteil A hergestellten Teilreifens durchgeführt wird, daß bei vorgegebener Endkontur des im Verfahrensteil B hergestellten Komplettreifens die Querschnittskontur des im Verfahrensteil A aufgebauten Teilreifens eine größere Breite aufweist als die im Verfahrensteil B ausgeformte Endkontur des Komplettreifens.

Durch eine solcher Art vorgefertigte 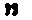 lange Seite", durch die eine zusätzliche Karkasslänge zur Verfügung gestellt wird, werden auch die auf die Verstärkungslagen innerhalb der Karkasse wirkenden Spannungen oder Stauchungen und auch die Belastungen im Kernbereich deutlich reduziert. Über die Wechselwirkung zwischen Gürtel und Karkasse wirken sich darüber hinaus die geringeren Dehnungen des Reifenquerschnitts auch und verstärkend günstig auf die Belastung der Gürtelcorde und der Gürtelkanten aus.

Bei einer solchen Vorbestimmung der Querschnittskontur des im Verfahrensteil A hergestellten Teilreifens ist selbstverständlich der Einfluß der Dicke der im Verfahrensteil B noch aufzubringenden Bauteile zu berücksichtigen.

In einer weiteren alternativen und vorteilhaften Ausbildung des Verfahrens wird eine solche Vorbestimmung der Endkontur des im Verfahrensteil B hergestellten Komplettreifens durchgeführt, daß bei vorgegebener Querschnittskontur des im Verfahrensteil A aufgebauten Teilreifens die Endkontur des im Verfahrensteil B hergestellten Komplettreifens eine flachere Seitenwandkontur aufweist als die der im Verfahrensteil A ausgeformten Querschnittskontur des Teilreifens.

Hierdurch ergibt sich die Möglichkeit, ohne große Voranpassungen des im Verfahrensteil A aufgebauten Teilreifens, sämtliche Verfahrensmaßnahmen zur Reduzierung von Spannungen und Stauchungen in den Bereich der Vulkanisation bzw. der Heizformausbildung oder -einstellung zu legen, wodurch sich Vorteile dadurch ergeben können, daß als Teilreifen eine stets gleich ausgebildete Einheitskarkasse in großen Anzahlen hergestellt werden kann. Dies ist jedoch in wirtschaftlicher Hinsicht zu korrellieren mit den sich durch eine solche Maßnahme verteuernden Form- oder Vulkanisationsverfahren, zu denen auch entsprechende Vorrichtungsanpassungen gehören müssen.

So kann beispielsweise eine flachere Seitenwandkontur des im Verfahrensteil B hergestellten Komplettreifens dadurch erreicht werden, daß eine Vulkanisationsform mit einer verringerten Heizmaulweite, d. h. mit einem verringerten Abstand zwischen den An- bzw. Auflageflächen für die Wulstbereiche genutzt wird, was bei konstanter zur Verarbeitung stehenden Materialmasse zu einer flacheren Seitenwandkontur führt.

Ebenso wie bei der direkten Ausbildung und Beeinflußung der Resterhebung gemäß Hauptanspruch, wird - wie nach Darstellung der übrigen Verfahrensausbildungen nun deutlich - auch bei den auf die Vorbestimmung der Formen der in den Verfahrensteilen A oder B hergestellten Reifen(-teilen) gerichteten Verfahrensvarianten eine indirekte Beeinflußung der Resterhebung ermöglicht.

Ein weiterer Vorteil der genannten Verfahren besteht darin, daß der Verlust an Kontaktdruck, der infolge der Deformation der Verstärkungslagen aufgrund der Resterhebung auftritt, reduziert wird. Damit erreicht man eine vergleichmäßigte und ausreichend starke Anpressung zwischen Karkassbauteilen und restlichen Reifenteilen. Weiterhin ist damit eine sichere Einstellung von Vulkanisationsdruck und -temperatur erreichbar, die zu einer völlig einwandfreien Verbindung der Reifenbauteile untereinander führt. Mit einem solchen Verfahren wird darüberhinaus die Bildung von Porositäten im Laufstreifengummi vermieden, wie sie durch einen zu geringen Kontaktdruck während der Vulkanisation entstehen kann.

Dadurch, daß der Grad der Resterhebung umgekehrt proportional zur Höhe der Umfangssteifigkeit des Gürtelverbandes verläuft, erreicht man ein ausgesprochen gleichmäßigen Kontaktdruck über die gesamte Reifenbreite.

Vorteilhafterweise beträgt die auf den Durchmesser bezogene Resterhebung im Zenitbereich 1 bis 6 mm, vorzugsweise 2 bis 4 mm, und die auf den Durchmesser bezogene Resterhebung der Schulterbereiche 2 bis 6 mm, vorzugsweise 3 bis 4 mm.

Mit einer solchen maßlichen Ausbildung der Resterhebung erreicht man bei einer großen Anzahl von Reifengrößen und -typen eine Verringerung von Stauchungen und Spannungen durch nur geringfügige Voreinstellungen der Querschnittskontur des im Verfahrensteil A hergestellten Teilreifens bzw. durch nur geringfügige Änderungen in Vulkanisation bzw. in der Vulkanisationsform.

Eine Vergleichmäßigung des Kontaktdruckes und eine vergleichmäßigt reduzierte Belastung der Festigkeitsträger im Reifen erreicht man dadurch, daß der zwischen Gürtellagen und Laufrichtung des Reifens gebildete Winkel (Gürtelwinkel) größer als 20° ist. Vorzugsweise wird ein 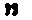 stumpfer" Gürtelwinnkel von etwa 25° ausgebildet. Durch einen solchen stumpfen Gürtelwinkel nimmt die Umfangssteifigkeit des Gürtelverbands ab, was bei vorgegebener Deformation zu geringeren Kräften in den Gürtelcorden und ebenfalls zur gleichmäßigen Druckverteilung innerhalb des komplettierten Reifens führt.

Anhand eines Ausführungsbeispieles soll die Erfindung näher erläutert werden. Es zeigen:
- Fig. 1: einen in eine zum Verfahrensteil B gehörige Vulkanisationsform eingelegten und im Verfahrensteil A bereits aufgebauten Teilreifen ohne Innendruck (Vulkanistionsdruck),
- Fig. 2: einen in eine zum Verfahrensteil B gehörige Vulkanisationsform eingelegten und im Verfahrensteil A bereits aufgebauten Teilreifen unter Vulkanisationsdruck.

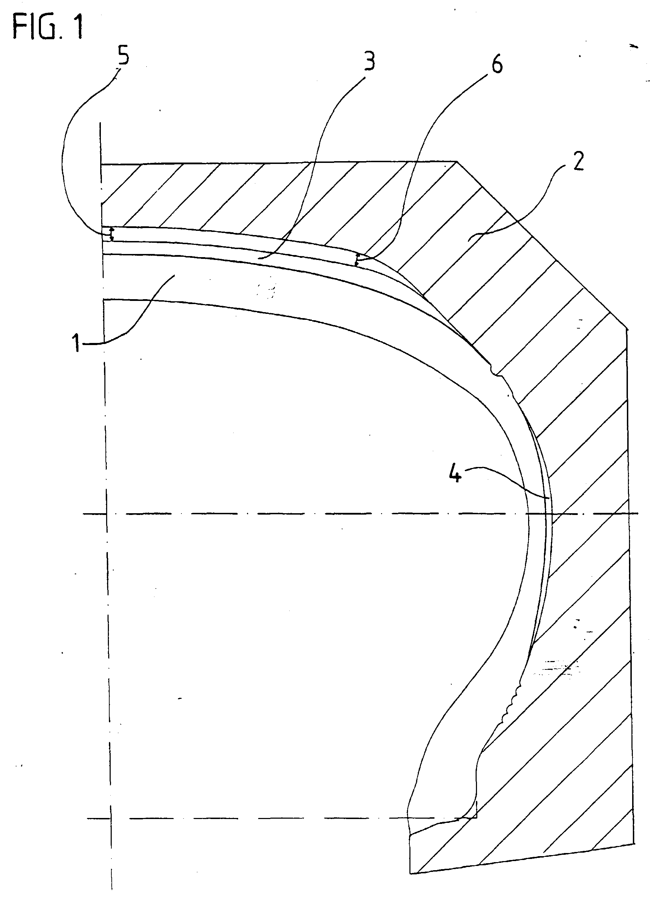

Die Figur 1 zeigt einen in einem Verfahrensteil A bereits hergestellten und vorvulkanisierten Teilreifen 1 im Halbquerschnitt, der in eine als Segmentform ausgebildete Vulkanisationsform 2 eingelegt ist, in der im Verfahrensteil B nach Hinzufügen der restlichen Reifenbauteile der Komplettreifen aufgebaut wird. Die restlichen Reifenbauteile, nämlich der Laufstreifen 3 mit der Unterplatte und zusätzliche Seitenwandstreifen 4 sind hier bereits aufgelegt. Die vorgegebene Endkontur des im Verfahrensteil B herzustellenden Komplettreifens ist hierbei durch die Innenkontur der Vulkanisationsform 2 festgelegt.

Die Querschnittkontur des im Verfahrensteil A bereits aufgebauten Teilreifens wies eine größere Breite auf als die im Verfahrensteil B nun aufzuformende Endkontur des Komplettreifens, so daß sich nach Einlegen des Teilreifens in die Vulkanisationsform und das Anlegen der Seitenteile an die durch die Vulkanisationsform vorgegebene geringere Breite der Endkontur in der Form die Freiräume bzw. Abstände 5 und 6 für die Resterhebung im Zenitbereich und für die Resterhebungen im Schulterbereich ergeben.

Der zur Verfügung stehende Abstand für die Resterhebung im Zenit beträgt hierbei 1 mm und der zur Verfügung stehende Freiraum für die Resterhebung im Schulterbereich 3 mm.

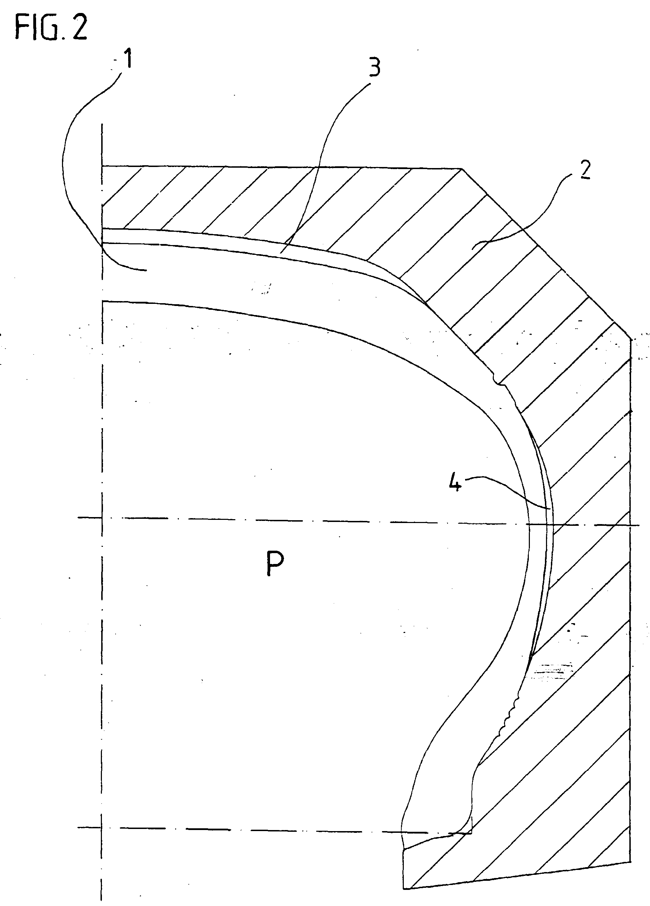

Die Figur 2 zeigt den Zustand während der Durchführung des Verfahrensteiles B, in dem der Teilreifen 1 und die restlichen Reifenbauteile 3 und 4 sich unter Innendruckbelastung P und unter Resterhebung an die Innenkontur der Vulkanisationsform 2 anlegen und dort unter Vulkanisationsdruck und -temperatur ausgeformt und sicher miteinander verbunden werden.

Nach dem Vulkanisationsvorgang wird die Segmentform geöffnet und der fertige Komplettreifen der Vulkanisationsanlage entnommen.

### Bezugszeichenliste

- 1: Teilreifen
- 2: Vulkanisationsform
- 3,4: restliche Reifenbauteile
- 5: Abstand zur Resterhebung im Zenit
- 6: Abstand zur Resterhebung im Schulterbereich
- P: Innendruckbelastung durch Vulkanisationsdruck

## Patentansprüche

1. Verfahren zur Herstellung eines Luftreifens, insbesondere zur Herstellung eines Luftreifens für Kraftfahrzeuge, wobei das Verfahren einen schrittweisen Aufbau des Reifens mit einer Innenseele aus einer möglichst weitgehend luftundurchlässigen Schicht, zumindest einer mit Festigkeitsträgern versehenen Karkassenlage, Hornprofilen, Wulstkernen, Seitenwänden sowie einem Gürtelverband, ggf. einer ein- oder mehrteiligen Gürtelbandage und einem Laufstreifen umfaßt, und das Herstellverfahren in zwei voneinander getrennte Verfahrensteile A und B geteilt ist, und wobei im Verfahrensteil A ein Teilreifen aufgebaut wird, der zumindest den mit Verstärkungslagen versehenen Karkasskörper mit Wulstverstärkungen und -kernen, Kernreitern und die Hornprofilen, sowie gegebenenfalls bereits Teile der Gürtellagen und / oder der Gürtelbandage und des Laufstreifenunterbaus beinhaltet, und der bombiert und anschließend in einem ersten Vulkanisationsvorgang unter Innendruck in einer Vulkanisationsform mindestens teilweise vulkanisiert wird, wobei sowohl der Oberfläche als auch dem bzw. den Festigkeitsträger(n) eine vorbestimmte Querschnittskontur vermittelt wird, wobei im Verfahrensteil B der Teilreifen durch Hinzufügen der restlichen Reifenbauteile, im wesentlichen durch Hinzufügen des Gürtelverbandes, gegebenenfalls der zumindest einlagigen ein- oder mehrteiligen Gürtelbandage, des Laufstreifens und der restlichen Seitenwandteile zu einem Komplettreifen aufgebaut werden, welcher ebenfalls zur Verbindung mit den restlichen Reifenbauteilen unter Aufbringen einer durch Innendruck erzeugten Resterhebung in einer Vulkanisationsform einem zweiten Vulkanisationsvorgang unterzogen wird, in welchem der Komplettreifen zur Endkontur geformt wird,
**dadurch gekennzeichnet,**
daß die im Verfahrensteil B während des zweiten Vulkanisationsvorganges in einer Vulkanisationsform durch Innendruck aufgebrachte Resterhebung der Schulterbereiche des komplettierten Reifens größer als die oder gleich der Resterhebung im Zenitbereich ist.

2. Verfahren zur Herstellung eines Luftreifens, insbesondere zur Herstellung eines Luftreifens für Kraftfahrzeuge, wobei das Verfahren einen schrittweisen Aufbau des Reifens mit einer Innenseele aus einer möglichst weitgehend luftundurchlässigen Schicht, zumindest einer mit Festigkeitsträgern versehenen Karkassenlage, Hornprofilen, Wulstkernen, Seitenwänden sowie einem Gürtelverband, ggf. einer ein- oder mehrteiligen Gürtelbandage und einem Laufstreifen umfaßt, und das Herstellverfahren in zwei voneinander getrennte Verfahrensteile A und B geteilt ist, und wobei im Verfahrensteil A ein Teilreifen aufgebaut wird, der zumindest den mit Verstärkungslagen versehenen Karkasskörper mit Wulstverstärkungen und -kernen, Kernreitern und die Hornprofilen, sowie gegebenenfalls bereits Teile der Gürtellagen und / oder der Gürtelbandage und des Laufstreifenunterbaus beinhaltet, und der bombiert und anschließend in einem ersten Vulkanisationsvorgang unter Innendruck in einer Vulkanisationsform mindestens teilweise vulkanisiert wird, wobei sowohl der Oberfläche als auch dem bzw. den Festigkeitsträger(n) eine vorbestimmte Querschnittskontur vermittelt wird, wobei im Verfahrensteil B der Teilreifen durch Hinzufügen der restlichen Reifenbauteile, im wesentlichen durch Hinzufügen des Gürtelverbandes, gegebenenfalls der zumindest einlagigen ein- oder mehrteiligen Gürtelbandage, des Laufstreifens und der restlichen Seitenwandteile zu einem Komplettreifen aufgebaut werden, welcher ebenfalls zur Verbindung mit den restlichen Reifenbauteilen unter Aufbringen einer durch Innendruck erzeugten Resterhebung in einer Vulkanisationsform einem zweiten Vulkanisationsvorgang unterzogen wird, in welchem der Komplettreifen zur Endkontur geformt wird,
**dadurch gekennzeichnet,**
daß eine solche Vorbestimmung der Querschnittskontur des im Verfahrensteil A hergestellten Teilreifens durchgeführt wird, daß bei vorgegebener Endkontur des im Verfahrensteil B hergestellten Komplettreifens die Querschnittskontur des im Verfahrensteil A aufgebauten Teilreifens eine größere Breite aufweist als die im Verfahrensteil B ausgeformte Endkontur des Komplettreifens.

3. Verfahren zur Herstellung eines Luftreifens, insbesondere zur Herstellung eines Luftreifens für Kraftfahrzeuge, wobei das Verfahren einen schrittweisen Aufbau des Reifens mit einer Innenseele aus einer möglichst weitgehend luftundurchlässigen Schicht, zumindest einer mit Festigkeitsträgern versehenen Karkassenlage, Hornprofilen, Wulstkernen, Seitenwänden sowie einem Gürtelverband, ggf. einer ein- oder mehrteiligen Gürtelbandage und einem Laufstreifen umfaßt, und das Hersteilverfahren in zwei voneinander getrennte Verfahrensteile A und B geteilt ist, und wobei im Verfahrensteil A ein Teilreifen aufgebaut wird, der zumindest den mit Verstärkungslagen versehenen Karkasskörper mit Wulstverstärkungen und -kernen, Kernreitern und die Hornprofilen, sowie gegebenenfalls bereits Teile der Gürtellagen und / oder der Gürtelbandage und des Laufstreifenunterbaus beinhaltet, und der bombiert und anschließend in einem ersten Vulkanisationsvorgang unter Innendruck in einer Vulkanisationsform mindestens teilweise vulkanisiert wird, wobei sowohl der Oberfläche als auch dem bzw. den Festigkeitsträger(n) eine vorbestimmte Querschnittskontur vermittelt wird, wobei im Verfahrensteil B der Teilreifen durch Hinzufügen der restlichen Reifenbauteile, im wesentlichen durch Hinzufügen des Gürtelverbandes, gegebenenfalls der zumindest einlagigen ein- oder mehrteiligen Gürtelbandage, des Laufstreifens und der restlichen Seitenwandteile zu einem Komplettreifen aufgebaut werden, welcher ebenfalls zur Verbindung mit den restlichen Reifenbauteilen unter Aufbringen einer durch Innendruck erzeugten Resterhebung in einer Vulkanisationsform einem zweiten Vulkanisationsvorgang unterzogen wird, in welchem der Komplettreifen zur Endkontur geformt wird,
**dadurch gekennzeichnet,**
daß eine solche Vorbestimmung der Endkontur des im Verfahrensteil B hergestellten Komplettreifens durchgeführt wird, daß bei vorgegebener Querschnittskontur des im Verfahrensteil A aufgebauten Teilreifens die Endkontur des im Verfahrensteil B hergestellten Komplettreifens eine flachere Seitenwandkontur aufweist als die der im Verfahrensteil A ausgeformten Querschnittskontur des Teilreifens.

4. Verfahren zur Herstellung eines Luftreifens nach Anspruch 1 bis 3, dadurch gekennzeichnet, daß die auf den Durchmesser bezogene Resterhebung im Zenitbereich 1 bis 6 mm, vorzugsweise 2 bis 4 mm, und die auf den Durchmesser bezogene Resterhebung der Schulterbereiche 2 bis 6 mm, vorzugsweise 3 bis 4 mm, beträgt.

5. Verfahren zur Herstellung eines Luftreifens nach Anspruch 1 bis 4, dadurch gekennzeichnet, daß der zwischen Gürtellagen und Laufrichtung des Reifens gebildtete Winkel (Gürtelwinkel) größer als 20° ist.

6. Verwendung des Verfahrens nach Anspruch 1, 3 oder 4 zur Runderneuerung von gebrauchten Reifen, bei der eine vorbereitete und von Oberflächenschichten und Laufstreifen befreite Altkarkasse mit neuen Reifenbauteilen wieder zu einem Komplettreifen aufgebaut wird.
